# EUROPEAN PATENT APPLICATION

(11) **EP 4 848 410 A1**
(43) Date of publication of application: **02.12.2026**
(21) Application number: 26181785.2
(22) Date of filing: 28.05.2026
(51) Int. Cl.: H01M 10/613, H01M 10/6555, H01M 10/6557, H01M 10/6567, H01M 50/204

(54) **BATTERY MODULE**

(30) Priority: 28.05.2025 KR 20250069991
(71) Applicant: SK On Co., Ltd., Seoul 03161 (KR)
(72) Inventor: SHIN, Suk Ho, 34124 Daejeon (KR); CHO, Sei Hoon, 34124 Daejeon (KR); KIM, Ji Min, 34124 Daejeon (KR); PARK, Byung Jun, 34124 Daejeon (KR); LEE, Seo Woo, 34124 Daejeon (KR); LEE, Woo Jin, 34124 Daejeon (KR); JUNG, Ho Young, 34124 Daejeon (KR)
(74) Representative: Stolmár & Partner Patentanwälte PartG mbB

(57) **Abstract**

The present disclosure provides a battery module (10) that includes a battery cell stack in which a plurality of battery cells are stacked, a housing (100) in which the battery cell stack is disposed, and a shielding member (500) disposed between the battery cell stack and the housing, wherein a gas vent hole (121) may be disposed in a portion of an upper surface or a lower surface of the housing and may be formed through the housing.

## Description

### [BACKGROUND OF THE INVENTION]

### [Field of the Invention]

The present disclosure relates to a battery module to which an immersion cooling method is applied.

### [Description of the Related Art]

The usage and application fields of batteries are rapidly expanding. As battery capacity significantly increases, battery modules in which a plurality of battery cells are electrically connected and battery packs in which a plurality of battery modules are electrically connected are used in mediumto large-sized devices.

The battery cells that constitute a battery module may generate a large amount of heat during charging and discharging processes, or due to various causes, such as a short circuit or being left at a high temperature.

If such heat is not removed, the performance of the battery module may degrade due to heat accumulation. In some cases, there is even a risk of battery ignition or explosion.

### [SUMMARY OF THE INVENTION]

According to an aspect of the present disclosure, a battery module according to an embodiment may provide a structure capable of preventing entrainment of high-temperature gas and cooling fluid when an event such as battery overheating or explosion occurs.

According to an aspect of the present disclosure, a battery module according to an embodiment may provide a structure capable of improving cooling efficiency by allowing cooling fluid to smoothly flow into a housing even when an event occurs.

A battery module according to an embodiment of the present disclosure may include: a battery cell stack including a plurality of battery cells; a housing in which the battery cell stack is disposed; a shielding member disposed between the battery cell stack and the housing; and a gas vent hole disposed in a portion of an upper surface or a lower surface of the housing and formed through the housing.

According to an embodiment, the gas vent hole may extend along a stacking direction of the plurality of battery cells.

According to an embodiment, the shielding member may be disposed at an upper portion and a lower portion of the plurality of battery cells and at one end and the other end at which electrode tabs of the plurality of battery cells are disposed.

According to an embodiment, the gas vent hole may be formed through the shielding member.

According to an embodiment, the housing may include a cooling fluid inlet disposed at one end and a cooling fluid outlet disposed at the other end thereof.

According to an embodiment, the battery module may further include a busbar assembly disposed in the housing and electrically connected to the plurality of battery cells, wherein the busbar assembly may be immersed in cooling fluid introduced into the housing.

According to an embodiment, each of the plurality of battery cells may include a battery body, electrode tabs, and one or more sealing parts that connect the battery body and the electrode tabs, wherein the shielding member may cover at least a portion of the sealing part, and the electrode tabs may be electrically connected to the busbar assembly.

According to an embodiment, the battery module may further include a cooling channel plate disposed between the plurality of battery cells to guide movement of the cooling fluid.

According to an embodiment, a plurality of cooling channel plates may be disposed, and at least two battery cells may be disposed between adjacent cooling channel plates.

According to an embodiment, each of the plurality of battery cells may be configured to be cooled while being in surface contact with the cooling channel plate.

According to an embodiment, the housing further may include a rib member that partition the gas vent hole.

According to an embodiment, the cooling channel plate may be in contact with the rib member.

According to an embodiment, the shielding member may be configured to control movement of fluid within the housing.

According to an embodiment, the shielding member may be adhered to an outer surface of the battery cell stack.

According to an embodiment, the battery module may further include a cover member coupled to the housing to cover the gas vent hole.

According to an embodiment, a plurality of gas vent holes may be formed and may be each in communication with at least one of the plurality of battery cells.

According to an embodiment, the cover member may include a slit formed in at least a portion thereof.

According to an embodiment, when at least one of the plurality of battery cells overheats, the slit formed in the cover member that is in communication with the overheated battery cell may rupture.

According to an embodiment, the cover member may be opened in a direction away from the plurality of battery cells.

According to an embodiment, the cover member may include a thermal insulating material to block heat transfer through the gas vent hole.

The battery module according to various embodiments of the present disclosure may prevent entrainment of cooling fluid and gas by disposing a shielding member on an outer surface of a battery cell stack.

In addition, in the present disclosure, gas venting may be guided by allowing a gas vent hole to be in communication with a battery cell.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a perspective view illustrating a battery module according to an embodiment of the present disclosure;
FIG. 2 is a perspective view of the battery module shown in FIG. 1 viewed from another position;
FIG. 3 is an exploded perspective view of the battery module shown in FIG. 1;
FIG. 4 is an enlarged view of portion D in FIG. 3;
FIG. 5 is a schematic front view of portion D in FIG. 3;
FIG. 6 is a schematic cross-sectional view illustrating a battery cell and a shielding member shown in FIG. 3;
FIG. 7 is a perspective view illustrating a cover member and slits;
FIG. 8 is a schematic cross-sectional view taken along line A-A of FIG. 1;
FIG. 9 is a cross-sectional view for describing a state in which the battery cell shown in FIG. 8 is overheated;
FIG. 10 is a schematic cross-sectional view taken along line B-B of FIG. 1; and
FIG. 11 is a schematic cross-sectional view taken along line C-C of FIG. 1.

### [DETAILED DESCRIPTION OF THE INVENTION]

The embodiments of the present disclosure are provided to more fully describe the present disclosure to those skilled in the art to which the present invention pertains. The following embodiments may be modified in various forms, and the scope of the present disclosure is not limited to these embodiments.

Hereinafter, some embodiments of the present disclosure will be described through exemplary drawings for the convenience of description. When assigning reference numerals to components of the respective drawings, it should be noted that the same components will be denoted by the same reference numerals, even if they appear in different drawings.

The terms or words used in this specification and the claims should not be construed as being limited to their conventional or lexical meanings, and instead, in accordance with the principle that an inventor may define the concepts of terms or words in the most appropriate manner to describe the invention, they should be interpreted based on the meanings and concepts that meet the technical spirit of the present disclosure.

The terms used herein are provided to describe specific embodiments and are not intended to limit the present disclosure. As used herein, the singular form may include the plural form unless the context clearly dictates otherwise.

In addition, when used to describe and define the present disclosure, terms such as "comprise," "include," "consist of," and "have" should be interpreted in a non-exclusive manner. Unless explicitly stated otherwise, these terms should be construed to imply that the presence of the corresponding component, and not to exclude but rather include other components.

In addition, in describing components of the embodiment of the present disclosure, the terms such as first, second, A, B, (a), (b), and the like may be used. These terms are used to distinguish the component from other components and do not impose any limitations on their nature, sequence or order, etc.

It will be understood that when a component is described as being "connected" or "coupled" to another component, the component may be directly connected or coupled to the other component, but it may be "connected" or "coupled" to the other component with another component possibly interposed.

Space-related terms such as "beneath," "below," "lower," "above," and "upper" may be used to aid in the understanding of the relationship between an element or feature and another illustrated in the drawings. These space-related terms are provided to aid in the understanding of the present disclosure in various processing or usage states and are not intended to impose any limitations on the present disclosure. For example, if an element or feature in the drawing is turned upside down, the element or feature described as "beneath" or "below" becomes "above" or "upper." Accordingly, the term "beneath" is a relative concept that may encompass "upper" as well as "below" depending on orientation.

The embodiments described in this specification and the configurations illustrated in the drawings merely represent the most preferred embodiments of the present disclosure but do not encompass all aspects of the technical spirit of the present disclosure. Thus, it should be understood that various modifications and equivalents may be implemented at the time of filing the present application. In addition, the publicly known functions and configurations that are deemed unnecessary for clarifying the essence of the present invention will not be described.

Hereinafter, a battery module 10 according to an embodiment of the present disclosure will be described in detail with reference to the accompanying drawings.

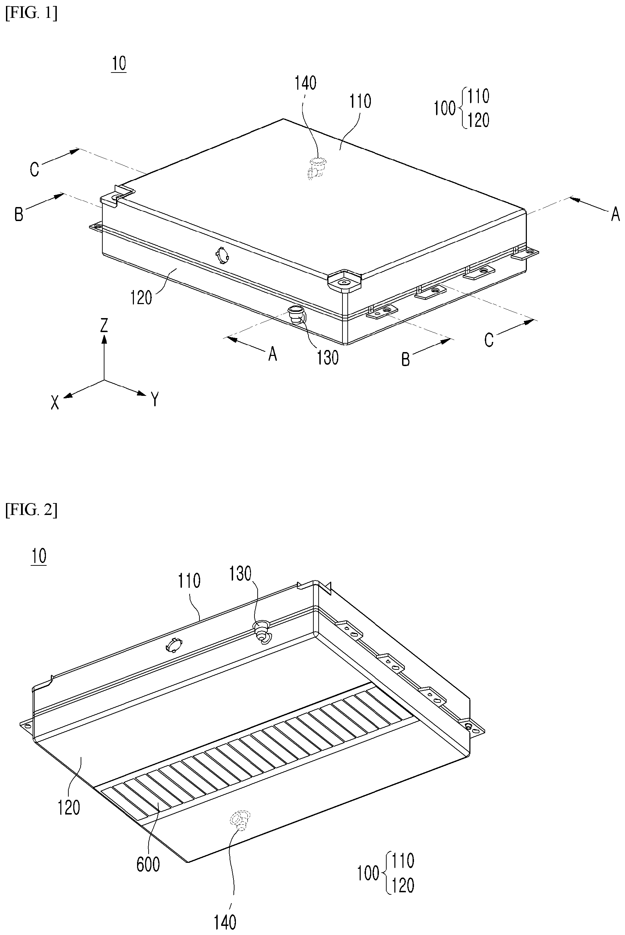

In the battery module 10 according to an embodiment of the present disclosure, a "vertical" direction may refer to a direction parallel to the Z-axis shown in FIG. 1. A longitudinal direction of a battery cell may refer to a direction parallel to the X-axis. The longitudinal direction of the battery cell may refer to a front-rear direction. The front may refer to a direction indicated by an X-axis arrow, and the rear may refer to the opposite direction. The stacking direction of the battery cell may refer to a direction parallel to the Y-axis. However, if the orientation of the corresponding object is changed, the directions may be defined differently.

FIG. 1 is a perspective view illustrating the battery module according to an embodiment of the present disclosure, and FIG. 2 is a perspective view illustrating the battery module according to an embodiment of the present disclosure, viewed upward from below.

Referring to FIGS. 1 and 2, the battery module 10 according to an embodiment of the present disclosure may include a housing 100. The housing 100 may include an upper housing 110 and a lower housing 120. A battery cell stack in which a plurality of battery cells are stacked may be accommodated in the housing 100.

The lower housing 120 may have a rectangular parallelepiped shape that is open at an upper surface. The respective surfaces that define the lower housing 120 may be integrally formed with each other or formed individually and joined by welding or bolts, etc. If necessary, the lower housing 120 may have a shape that is open at two or more surfaces.

The upper housing 110 may be coupled to the lower housing 120 to cover an open upper surface of the lower housing 120. The upper housing 110 may be formed in a shape similar to that of the lower housing 120. For example, the upper housing 110 may have a rectangular parallelepiped shape that is open at a lower surface. Alternatively, the upper housing 110 may be formed in a flat plate shape, unlike the lower housing 120. The upper housing 110 is not limited to a particular shape as long as it can be coupled to the lower housing 120 to cover the open upper surface.

The housing 100 may include a material having a predetermined rigidity to protect the battery cell 210 and other electronic components accommodated therein from external impact. The housing 100 may include an electrically insulating material so that the battery cell 210 accommodated therein can be electrically insulated from the outside.

A cooling fluid inlet 130 may be formed at one end of the housing 100, and a cooling fluid outlet 140 may be formed at the other end.

Cooling fluid may be introduced into the housing 100 through the cooling fluid inlet 130. The cooling fluid introduced into the housing 100 may flow out of the housing 100 through the cooling fluid outlet 140.

The cooling fluid inlet 130 may be formed at one end of the housing 100 along the longitudinal direction of the battery cell 210. The cooling fluid outlet 140 may be formed at the other end disposed opposite the one end.

The cooling fluid inlet 130 and the cooling fluid outlet 140 may be formed in the lower housing 120 or the upper housing 110, respectively. Alternatively, one of the cooling fluid inlet 130 and the cooling fluid outlet 140 may be formed in the lower housing 120, and the other may be formed in the upper housing 110. The heights at which the cooling fluid inlet 130 and the cooling fluid outlet 140 are formed may be different from each other.

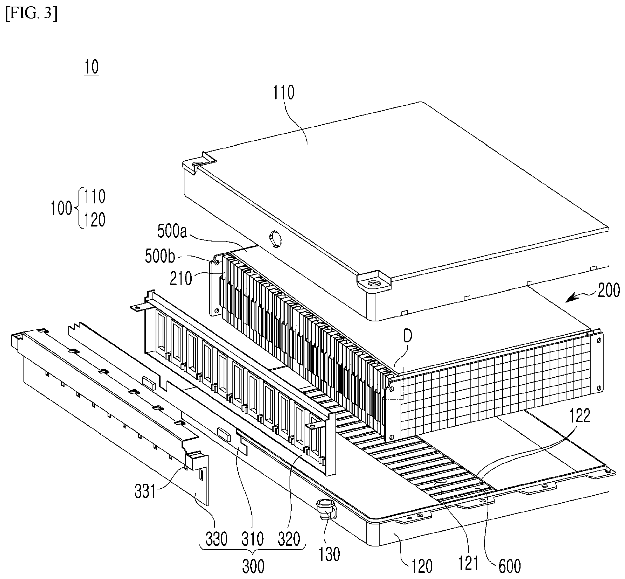

FIG. 3 is an exploded perspective view of the battery module according to an embodiment of the present disclosure.

Referring to FIG. 3, the battery module 10 according to an embodiment of the present disclosure may further include the battery cell 210, a busbar assembly 300, a cooling channel plate 400, and a shielding member 500.

The battery cell 210 may convert chemical energy into electrical energy or, when electrical power is supplied from an external source, convert electrical energy into chemical energy. For example, the battery cell 210 may be a rechargeable and dischargeable secondary battery.

The battery cell 210 may include an electrode assembly, an electrolyte, and an outer case. A pouch-type secondary battery may accommodate the electrode assembly and the electrolyte in a pouch-type outer case typically formed of a flexible metal thin film. The electrode assembly may include a cathode plate, an anode plate, and a separator that separates the cathode plate and the anode plate. An electrode tab may be formed on each electrode plate of the electrode assembly and connected to an electrode lead. In the case of the pouch-type secondary battery, one or more electrode tabs may be connected to electrode leads. The electrode lead may be interposed between pouch outer layers, with one end exposed to the outside and capable of functioning as an electrode terminal. The outer case may define a hollow space therein to accommodate the electrode assembly and the electrolyte, and may be formed in a sealed state. The outer case of the pouch-type secondary battery may be formed of aluminum or a composite material.

However, the foregoing description is merely one example, and the battery cell 210 according to an embodiment of the present disclosure may be a can-type secondary battery as well as a pouch-type secondary battery. The detailed configuration and material of such secondary batteries are well known in the art and therefore are not described in detail. The battery cell according to an embodiment of the present disclosure may be selected from various secondary batteries known at the time of filing of the present disclosure.

The battery cell stack 200 may be formed by stacking the plurality of battery cells 210.

The plurality of battery cells 210 may be electrically connected to each other. The plurality of battery cells 210 may be electrically connected by the busbar assembly 300 disposed at opposite ends of the battery cells 210 in the longitudinal direction.

The busbar assembly 300 may include a rigid printed circuit board (PCB) 310, a busbar frame 320, and an insulating plate 330.

The printed circuit board 310 may be an electronic control circuit implemented as a rigid, fixed-type printed circuit board. The printed circuit board 310 may electrically connect the battery cells 210 to other electronic components. For example, the printed circuit board 310 may measure a voltage and a current of the battery cells or detect a temperature. Alternatively, the printed circuit board 310 may perform battery protection functions, such as overcharge and overdischarge prevention.

A busbar may include a conductive material, such as metal. The busbar may electrically connect the plurality of battery cells 210 to each other.

The busbar frame 320 may be a plate configured to support the busbar. Electrode tabs 212 of the battery cells 210 may be welded to and electrically connected to the busbar.

The insulating plate 330 may be disposed between the housing 100 and the busbar frame 320 to prevent an electrical short-circuit between the housing 100 and the busbar frame 320.

The insulating plate 330 may be a member for electrically insulating the busbar.

A plurality of cooling holes 331 may be formed through the insulating plate 330 along the stacking direction of the battery cells 210. Cooling fluid introduced into the housing 100 through the cooling fluid inlet 130 may flow toward the battery cells 210 through the cooling holes 331.

The cooling channel plate 400 may be disposed between the plurality of battery cells 210.

The cooling channel plate 400 may define a passage through which cooling fluid flows. The cooling channel plate 400 may guide movement of the cooling fluid introduced into the housing 100 through the cooling fluid inlet 130 toward the cooling fluid outlet 140. The cooling fluid introduced into the housing 100 through the cooling fluid inlet 130 may move through the cooling channel plate 400 and be discharged through the cooling fluid outlet 140.

To enable the cooling fluid flowing within the cooling channel plate 400 to effectively cool the battery cells 210, the cooling channel plate 400 may include a material having high thermal conductivity. For example, the cooling channel plate 400 may include aluminum.

The cooling channel plate 400 may have a flat plate shape having a hollow interior. Alternatively, a plurality of cooling flow paths may be formed within the cooling channel plate 400 along the longitudinal direction of the battery cells 210.

The cooling fluid may flow within the cooling channel plate 400 disposed between the battery cells 210 and cool the battery cells 210. For example, the cooling channel plate 400 may be in surface contact with the battery cells 210. The cooling fluid may move along the longitudinal direction of the battery cells 210 through the cooling channel plate 400 and absorb heat from the battery cells 210, thereby cooling the battery cells 210.

The shielding member 500 may be disposed between the battery cell stack 200 and the housing 100.

For example, the shielding member 500 may be disposed in the vertical and longitudinal directions of the plurality of battery cells 210 with respect to the battery cell stack 200. In this case, gas vent holes 121 may penetrate the shielding member 500 so as to be in communication with the battery cells 210. For example, when the shielding member 500 is disposed between the battery cell stack 200 and a bottom surface of the lower housing 120, the shielding member 500 may be disposed in regions other than regions in which the gas vent holes 121 are formed.

As will be described in detail below, the shielding member 500 may seal a space between the battery cells 210 and the housing 100. For example, the space between the battery cells 210 and the housing 100 may be sealed by the shielding member 500, thereby controlling movement of cooling fluid and gas.

For example, the cooling fluid may be introduced into the housing 100 through the cooling fluid inlet 130. The cooling fluid may pass through the cooling holes 331 and move through the busbar assembly 300. The busbar assembly 300 may be immersed in the cooling fluid. The cooling fluid may then move to the cooling channel plate 400 disposed between the battery cells 210 and be discharged to the outside of the housing 100 through the cooling fluid outlet 140. In this case, the shielding member 500 may be disposed on an outer surface of the battery cell stack 200 to control the cooling fluid to move to the cooling fluid outlet 140 through the cooling channel plate 400.

For example, the shielding member 500 may include an epoxy-based waterproof resin. Alternatively, the shielding member 500 may include a hybrid resin. The shielding member 500 may be applied to the outer surface of the battery cell stack 200. The shielding member 500 may be adhered to the outer surface of the battery cell stack 200.

The shielding member 500 may be disposed between the battery cell stack 200 and the housing 100 to seal a space between the battery cell stack 200 and the housing 100. Fluid within the housing 100 may be prevented from passing through the shielding member 500. For example, a shielding member 500a may seal a space between an upper surface of the battery cell stack 200 and an upper surface of the housing 100. A shielding member 500c may seal a space between a lower surface of the battery cell stack 200 and a bottom surface of the housing 100. A shielding member 500b may be disposed at opposite ends of the battery cell stack 200 along the longitudinal direction. The shielding member 500 may form a sealed space by surrounding the battery cells 210. The shielding member 500 may block movement of the cooling fluid, thereby preventing the cooling fluid introduced into the housing 100 from directly contacting a battery body 211 of the battery cell 210.

At least a portion of the bottom surface of the lower housing 120 may be formed through to define the gas vent hole 121. The gas vent hole 121 may be formed to penetrate through the bottom surface of the lower housing 120 in the vertical direction. Alternatively, the gas vent hole 121 may be formed on the upper surface of the upper housing 110. Hereinafter, description will be made based on a configuration in which the gas vent hole 121 is formed on the bottom surface of the lower housing 120, but the formation position of the gas vent hole 121 may be changed as necessary.

The gas vent hole 121 may extend through the lower housing 120 along the stacking direction of the battery cells 210.

The gas vent hole 121 may be formed at an approximately central portion of the bottom surface of the lower housing 120. Alternatively, the gas vent hole 121 may be formed offset to one side rather than at the central portion of the bottom surface of the lower housing 120. However, the gas vent hole 121 may not be formed at opposite end portions of the bottom surface of the lower housing 120 in the longitudinal direction. For example, the gas vent hole 121 may be formed below the battery cell stack 200 so as to be in contact with the battery cell stack 200.

A plurality of gas vent holes 121 may be formed along the stacking direction of the battery cells 210.

The plurality of gas vent holes 121 may be respectively in communication with the plurality of battery cells 210. For example, one gas vent hole 121 may be in communication with one battery cell 210. Alternatively, one gas vent hole 121 may be in communication with the plurality of battery cells 210.

If any one of the battery cells 210 overheats or explodes, venting of gas inside the housing 100 may be guided through the gas vent hole 121.

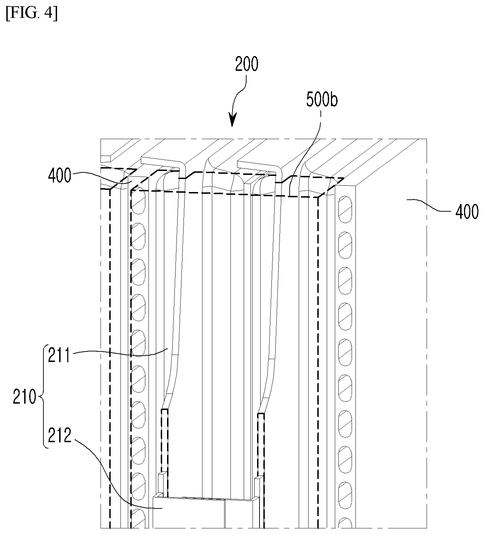

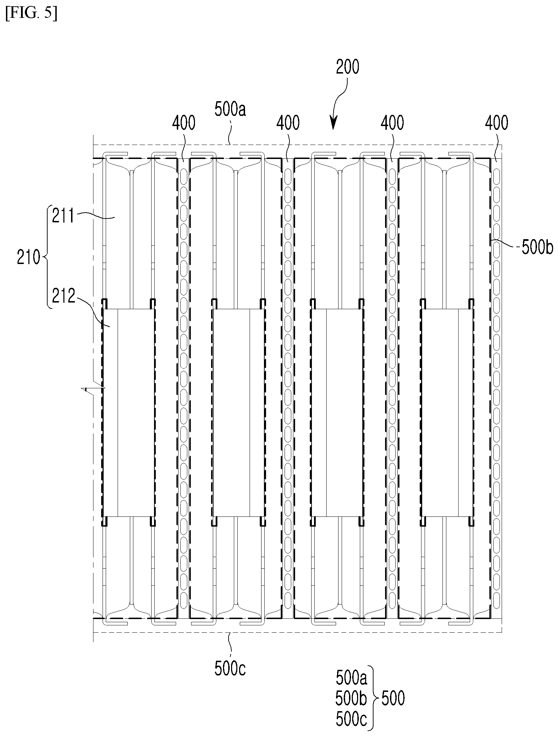

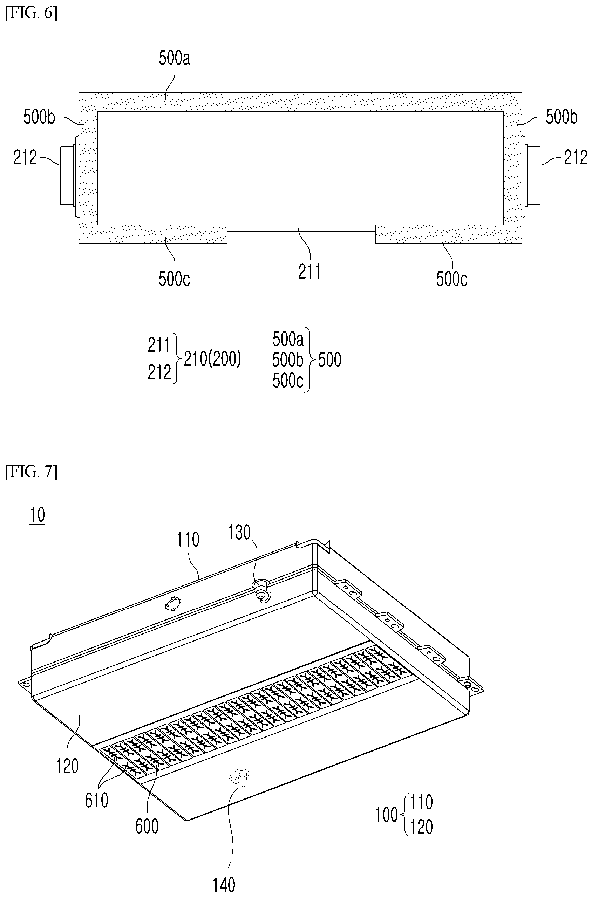

FIG. 4 is an enlarged view of portion D in FIG. 3, FIG. 5 is a schematic front view of portion D in FIG. 3, and FIG. 6 is a schematic cross-sectional view illustrating the battery cell and the shielding member shown in FIG. 3.

FIG. 4 is a view illustrating the battery cell and the shielding member, and the shielding member disposed on the upper surface of the battery cell stack is omitted.

Referring to FIGS. 4 to 6, the shielding member 500 may surround at least four side surfaces of the battery cell stack 200.

The battery cell stack 200 may be formed by stacking the plurality of battery cells 210.

Each of the battery cells 210 may include the battery body 211, the electrode tab 212, and a sealing part that connects the battery body 211 and the electrode tab 212.

The battery body 211 may include the electrode assembly and the electrolyte described above. The electrode tab 212 may protrude from the battery body 211. The electrode tab 212 may have a cathode tab and an anode tab that protrude from respective opposite ends of the battery body 211 in the longitudinal direction. Alternatively, the cathode tab and the anode tab may protrude in the same direction from one end of the battery body 211 in the longitudinal direction.

The shielding member 500 may be disposed to surround the opposite end surfaces in the longitudinal direction, the upper surface, and the lower surface of the battery cell stack 200.

The shielding member 500a may be disposed on the upper surface of the battery cell stack 200.

Although not illustrated in the drawings, the shielding member 500a may be disposed only on the upper surface of the battery cell stack 200 and may be spaced apart from the upper surface of the housing 100. In this case, the cooling fluid may flow through a space between the shielding member 500a and the upper surface of the housing 100.

Alternatively, the shielding member 500 may surround the upper surface of the battery cell stack 200 and adhere the battery cell stack 200 to the upper surface of the housing 100. In this case, the cooling fluid introduced into the housing 100 may flow through the cooling channel plate 400.

The shielding member 500b may cover portions of opposite end surfaces of the battery cell stack 200 (see FIGS. 4 and 5). For example, the shielding member 500b may cover the sealing part. To electrically connect the battery cells 210 to the busbar assembly 300, the shielding member 500 may be disposed on the opposite end surfaces of the battery cell stack 200, excluding the electrode tab 212 portion.

For example, the shielding member 500b may cover front and rear ends of the sealing part. Gas may be discharged through the front and rear ends of the sealing part of the battery cell 210. The shielding member 500b may be disposed at the front and rear ends of the sealing part to block gas discharge in the front and rear directions of the battery cell 210. The shielding member 500c may be adhered to only a portion of the bottom surface of the battery cell stack 200 so that the battery cell stack 200 is in communication with the gas vent holes 121. For example, the shielding member 500c may be adhered only to a portion at which the lower housing 120 contacts the bottom surface of the battery cell stack 200. The shielding member 500 may not be adhered to the bottom surface of the battery cell stack 200 that is in communication with the gas vent holes 121. The battery cell stack 200 may be in communication with the gas vent holes 121 through a portion to which the shielding member 500 is not adhered.

Referring to FIG. 5, the shielding member 500 may not be disposed on opposite end surfaces in the longitudinal direction of the cooling channel plate 400 disposed between the battery cells 210 so that the cooling fluid introduced into the housing 100 through the cooling fluid inlet 130 formed at one end of the housing 100 in the longitudinal direction may move to the other end.

The space surrounded by the shielding member 500 may be sealed by the shielding member 500, thereby controlling movement of fluid. Since the cooling fluid cannot pass through the shielding member 500, the cooling fluid located outside the shielding member 500 may not move to the battery cell 210 located inside the shielding member 500. Gas in the space in which the battery cell stack 200 is located inside the shielding member 500 cannot pass through the shielding member 500 and may move only through the gas vent holes 121. Therefore, the shielding member 500 may partition a space inside the housing 100 and control movement of the fluid.

FIG. 7 is a perspective view illustrating a cover member and slits.

Hereinafter, a cover member 600 will be described with reference to FIGS. 2 and 7.

The cover member 600 may be coupled to the housing 100 to cover the gas vent hole 121. The cover member 600 may be coupled to the housing 100 from the outside thereof. Alternatively, the cover member 600 may be coupled to the housing 100 from the inside thereof. The direction in which the cover member 600 is coupled to the housing 100 may be changed as long as the gas vent hole 121 can be covered.

A plurality of cover members 600 may be coupled to the housing 100 along the stacking direction of the battery cells 210.

For example, the housing 100 may have a plurality of gas vent holes 121 formed therein. The plurality of gas vent holes 121 may extend through the housing 100 along the stacking direction of the battery cells 210. A rib member 122 may be disposed between adjacent gas vent holes 121. The rib members 122 may partition the plurality of gas vent holes 121. The rib members 122 may be formed integrally with the housing 100.

Each cover member 600 may be coupled between adjacent rib members 122 to cover a respective one of the gas vent holes 121.

If an event such as overheating or explosion occurs in any one of the battery cells 210, the cover member 600 that covers the gas vent hole 121 in communication with the battery cell 210 may be opened as the pressure in a corresponding region increases. When the cover member 600 is opened, gas inside the housing 100 may be discharged to the outside.

The cover member 600 may include a thermal insulating material. For example, the cover member 600 may be formed of mica tape. For example, the cover member 600 may include ceramic wool.

As the cover member 600 covers the gas vent hole 121, heat transfer through the gas vent hole 121 may be blocked. For example, if an event occurs in any one of the battery cells 210, the cover member 600 in communication with the battery cell 210 may be opened, thereby allowing heat to be dissipated to the outside of the housing 100. In this case, the battery cell 210 in which the event occurred and an adjacent battery cell 210 may be partitioned by the cover member 600. Since the cover member 600 includes a thermal insulating material, heat dissipated to the outside of the housing 100 through the cover member 600 may not be transferred into the housing 100.

Meanwhile, a slit may be formed in at least a portion of the cover member 600. For example, a slit 610 may be formed by making a cut in the cover member 600. The slit 610 may not extend through the cover member 600. The shape of the slit 610 may be modified from that illustrated. For example, the slit 610 may have a linear shape. For example, the slit 610 may have an "X"-shaped form. The shape of the slit 610 is not particularly limited as long as it can weaken the strength of the cover member 600 at a portion where the slit 610 is formed.

A plurality of slits 610 may be formed in a single cover member 600. The number of slits 610 may vary depending on the area of the cover member 600 or the shape and size of the slits 610.

When at least one of the plurality of battery cells 210 overheats, the slit 610 formed in the cover member 600 that is in communication with the overheated battery cell 210 may rupture. As the slit 610 ruptures, at least a portion of the cover member 600 may be opened, thereby allowing heat from the overheated battery cell 210 to be discharged to the outside of the housing 100 through the opened portion.

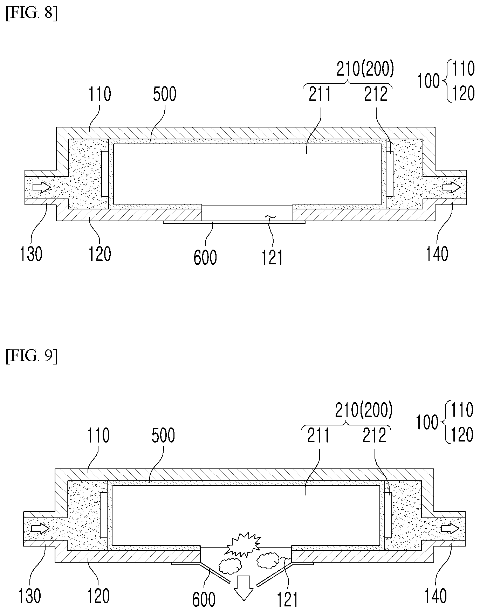

FIG. 8 is a schematic cross-sectional view taken along line A-A of FIG. 1, and FIG. 9 is a cross-sectional view for describing a state in which the battery cell shown in FIG. 8 is overheated. An operation of the battery module 10 will be described with reference to FIGS. 8 and 9.

Cooling fluid may be introduced into the housing 100 through the cooling fluid inlet 130 formed at one end of the housing 100.

Hereinafter, a space in which the battery cell 210 is located with respect to the shielding member 500 is referred to as a battery receiving space. A direction from the cooling fluid inlet 130 toward the cooling fluid outlet 140 is referred to as a first direction.

The movement of fluid within the housing 100 may be restricted by the shielding member 500. For example, fluid within the housing 100 cannot flow through the shielding member 500.

The upper and lower surfaces of the battery cell stack 200 may be coated with the shielding member 500 and adhered to the housing 100. A space between the battery cell stack 200 and the upper surface of the housing 100 and a space between the battery cell stack 200 and the bottom surface of the housing 100 may be sealed by the shielding member 500.

Opposite end surfaces of the battery cell stack 200 in the longitudinal direction may be coated with the shielding member 500. However, in order to electrically connect the plurality of battery cells 210, the electrode tabs 212 may not be coated with the shielding member 500.

In addition, to allow the cooling fluid to flow in the first direction, opposite end surfaces of the cooling channel plate 400 disposed between the battery cells 210 may not be coated with the shielding member 500, similar to the electrode tabs 212.

The cooling fluid introduced into the housing 100 may have its movement restricted by the shielding member 500, thereby controlling movement of the cooling fluid in the first direction. The cooling fluid may flow in the first direction through the cooling channel plate 400 that is not coated with the shielding member 500.

Meanwhile, the shielding member 500 may not be adhered to a portion of the bottom surface of the battery cell stack 200. For example, the shielding member 500 may be adhered only to a portion of the bottom surface of the battery cell stack 200 that contacts the housing 100. The shielding member 500 may not be disposed at portions of the housing 100 through which the gas vent holes 121 extend, so that the gas vent holes 121 and the battery cell stack 200 may be in communication with each other.

At least a portion of the battery cell stack 200 may be in communication with the gas vent holes 121. If the battery cell 210 overheats or thermal runaway occurs, an internal pressure of the battery receiving space may increase. As the internal pressure increases, the cover member 600 may be opened. Flame or high-temperature gas may be discharged to the outside of the housing 100 through the gas vent holes 121 that are in communication with the battery receiving space.

Referring to FIG. 9, the cover member 600 may be opened in a direction away from the battery cell 210. That is, with reference to FIG. 9, the cover member 600 may be opened in a downward direction. When the cover member 600 is opened, the gas vent holes 121 may communicate with the outside of the housing 100. Therefore, high-temperature gas in the battery receiving space may be discharged to the outside of the housing 100.

If the housing 100 does not have the gas vent hole 121, a separate vent hole should be formed to discharge gases inside the housing 100. When an event such as a fire or overheating occurs, high-temperature gases and foreign substances that may be generated inside the housing may be mixed with the cooling fluid and discharged. The foreign substances may block the vent hole, the cooling fluid inlet 130, or the cooling fluid outlet 140. As a result, when an event occurs, the cooling fluid may not circulate smoothly. Alternatively, upon occurrence of an event, the pressure inside the housing 100 may increase, thereby reducing inflow of the cooling fluid through the cooling fluid inlet 130. When the cooling fluid does not circulate smoothly, the cooling efficiency of the battery cell 210 may be reduced, thereby aggravating a fire or overheating.

However, according to the battery module 10 of an embodiment of the present disclosure, the cooling fluid may not directly contact the battery cell stack 200. In addition, when an event occurs, high-temperature gas may be discharged through the gas vent holes 121 located below the battery cell stack 200, thereby preventing foreign substances from accumulating in the cooling fluid inlet 130 and the cooling fluid outlet 140. Therefore, the cooling fluid may flow smoothly within the housing 100 without being impeded.

For example, when an event occurs in the battery cell 210, the cooling fluid may be introduced into the housing 100 through the cooling fluid inlet 130, flow through the cooling channel plate 400, and then be discharged to the outside of the housing 100 through the cooling fluid outlet 140. In this case, high-temperature gas generated by the overheated battery cell 210 may be discharged to the outside of the housing 100 through the gas vent holes 121.

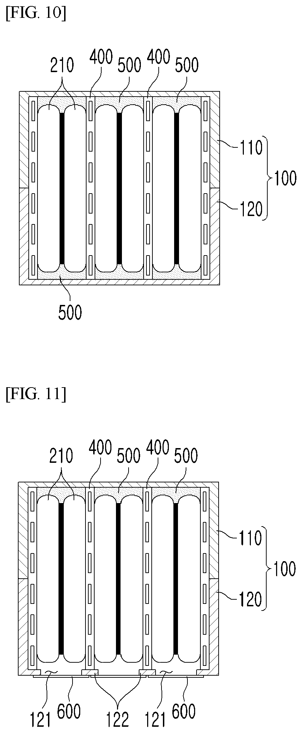

FIG. 10 is a schematic cross-sectional view taken along line B-B of FIG. 1, and FIG. 11 is a schematic cross-sectional view taken along line C-C of FIG. 1. Hereinafter, the battery module 10 according to an embodiment of the present disclosure will be described with reference to FIGS. 10 and 11.

Cooling fluid may be introduced into the housing 100 through the cooling fluid inlet 130. Although not illustrated in the drawings, the cooling fluid may flow in the first direction through the cooling holes 331 penetrating in the insulating plate 330. The cooling fluid flowing toward the battery cell stack 200 may flow in the first direction through the cooling channel plate 400 and be discharged to the outside of the housing 100 through the cooling fluid outlet 140.

Referring to FIG. 10, within the housing 100, upper and lower portions of the battery cell stack 200 may be sealed by the shielding member 500. For example, the shielding member 500 may be disposed between the upper surface of the battery cell stack 200 and an upper inner portion of the housing 100. Accordingly, the upper portion of the battery cell stack 200 is sealed, and the cooling fluid may not flow in the first direction above the battery cell stack 200.

The shielding member 500 may be disposed between the lower surface of the battery cell stack 200 and a lower inner portion of the housing 100. Accordingly, the lower portion of the battery cell stack 200 may be sealed. Therefore, the cooling fluid introduced into the housing 100 may not flow in the first direction below the battery cell stack 200.

The cooling fluid introduced into the housing 100 may enter the cooling channel plate 400 disposed between the battery cells 210 and flow in the first direction therethrough.

Referring to FIG. 11, the shielding member 500 may not be disposed on at least a portion of the lower surface of the battery cell stack 200. The gas vent holes 121 may penetrate the bottom surface of the housing 100 at portions where the shielding member 500 is not disposed. However, the shielding member 500 may be disposed in the front-rear direction of the gas vent holes 121. Accordingly, a space between the battery cell stack 200 and the bottom surface of the housing 100 in the front-rear direction of the gas vent holes 121 may be sealed by the shielding member 500 (see FIG. 10). Therefore, cooling fluid introduced into the housing 100 may not flow into the gas vent holes 121.

Meanwhile, the cooling channel plate 400 may be disposed so as to be in contact with the rib member 122. When the cooling channel plate 400 is disposed in contact with the rib member 122, the cooling channel plate 400 may partition the battery receiving space (see FIGS. 10 and 11). In this case, the battery receiving space may be sealed by the shielding member 500 in the longitudinal direction and the vertical direction of the battery cells 210. The battery receiving space may be sealed by the cooling channel plate 400 in the stacking direction of the battery cells 210.

If an event occurs in any one of the battery cells 210, since the battery receiving space is sealed, heat in the battery receiving space of the overheated battery cell 210 may not be transferred to an adjacent battery receiving space.

Meanwhile, at least two battery cells 210 may be disposed between adjacent cooling channel plates 400. When two battery cells 210 are disposed between the adjacent cooling channel plates 400, the battery cells 210 may each be in contact with the cooling channel plates 400. Therefore, the cooling efficiency of the battery cells 210 may be improved.

The cooling channel plate 400 may have a shape similar to that of the battery body 211. For example, the cooling channel plate 400 may have a rectangular parallelepiped shape. An area of the cooling channel plate 400 may be similar to that of the battery body 211. The cooling channel plate 400 may be in surface contact with the battery body 211. When the cooling channel plate 400 and the battery body 211 are in surface contact, a contact area may be increased, thereby improving cooling efficiency.

While the preferred embodiments of the present invention have been described in detail above, the scope of the present disclosure is not limited thereto. Various modifications and improvements made by those skilled in the art, utilizing the basic concepts of the present disclosure defined in the following claims, also fall within the scope of the present disclosure.

## Claims

1. A battery module comprising:
a battery cell stack comprising a plurality of battery cells;
a housing in which the battery cell stack is disposed;
a shielding member disposed between the battery cell stack and the housing; and
a gas vent hole disposed in a portion of an upper surface or a lower surface of the housing and formed through the housing.

2. The battery module according to claim 1, wherein the gas vent hole extends along a stacking direction of the plurality of battery cells.

3. The battery module according to claim 1, wherein the shielding member is disposed at an upper portion and a lower portion of the plurality of battery cells and at one end and the other end at which electrode tabs of the plurality of battery cells are disposed, and wherein the gas vent hole is formed through the shielding member.

4. The battery module according to claim 1, wherein the housing comprises a cooling fluid inlet disposed at one end and a cooling fluid outlet disposed at the other end thereof.

5. The battery module according to claim 4, further comprising a busbar assembly disposed in the housing and electrically connected to the plurality of battery cells,
wherein the busbar assembly is immersed in cooling fluid introduced into the housing.

6. The battery module according to claim 5, wherein each of the plurality of battery cells comprises a battery body, electrode tabs, and one or more sealing parts that connect the battery body and the electrode tabs,
wherein the shielding member covers the sealing part.

7. The battery module according to claim 4, further comprising a cooling channel plate disposed between the plurality of battery cells to guide movement of the cooling fluid.

8. The battery module according to claim 7, wherein a plurality of cooling channel plates are disposed, and
at least two battery cells are disposed between adjacent cooling channel plates.

9. The battery module according to claim 7, wherein the housing further comprises a rib member that partitions the gas vent hole.

10. The battery module according to claim 9, wherein the cooling channel plate is in contact with the rib member.

11. The battery module according to claim 1, wherein the shielding member is adhered to an outer surface of the battery cell stack and controls movement of fluid within the housing.

12. The battery module according to claim 1, further comprising a cover member coupled to the housing to cover the gas vent hole.

13. The battery module according to claim 12, wherein a plurality of gas vent holes are formed and each of the plurality of battery cells is in communication with at least one of the plurality of gas vent holes.

14. The battery module according to claim 12, wherein the cover member includes a slit formed in at least a portion thereof, when at least one of the plurality of battery cells overheats, the slit formed in the cover member that is in communication with the overheated battery cell is configured to rupture.

15. The battery module according to claim 15, wherein the cover member comprises a thermal insulating material to block heat transfer through the gas vent hole.
